# EUROPÄISCHE PATENTSCHRIFT

(11) **EP 3 991 279 B1**
(45) Veröffentlichungstag und Bekanntmachung des Hinweises auf die Patenterteilung: **05.08.2026**
(21) Anmeldenummer: 20733891.4
(22) Anmeldetag: 15.06.2020
(51) Int. Cl.: H02K 7/116, F16H 57/033, H02K 5/04, H02K 7/00, H02K 7/14

(54) **GETRIEBEMOTORBAUREIHE**
GEARED MOTOR SERIES
SÉRIE DE MOTORÉDUCTEURS

(30) Priorität: 28.06.2019 DE 102019004512
(43) Veröffentlichungstag der Anmeldung: 04.05.2022
(73) Patentinhaber: SEW-EURODRIVE GmbH & Co. KG, 76646 Bruchsal (DE)
(72) Erfinder: TEGELTIJA, Miki, 76689 Karlsdorf-Neuthardt (DE); BÜHN, Oliver, 76703 Kraichtal (DE)
(86) Internationale Anmeldenummer: PCT/EP2020/025287
(87) Internationale Veröffentlichungsnummer: WO 2020/259868

(56) Entgegenhaltungen:
- EP-A1- 0 567 048
- DE-A1- 102013 003 165

## Beschreibung

Die Erfindung betrifft eine Getriebemotorbaureihe.

Es ist allgemein bekannt, dass ein Getriebemotor einen Elektromotor und ein Getriebe aufweist.

DE 10 2013 003 165 A1 ist nächstliegender Stand der Technik und offenbart eine Getriebemotorbaureihe mit Adapterteil, Getriebe und Getriebemotoren,
wobei die Getriebemotoren der Getriebemotorbaureihe jeweils dasselbe Adapterteil sowie jeweils dasselbe Getriebe und wahlweise entweder,
gemäß einer ersten Variante der Getriebemotorbaureihe einen ersten Elektromotor,
oder gemäß einer zweiten Variante der Getriebemotorbaureihe einen zweiten Elektromotor oder gemäß einer dritten Variante der Getriebemotorbaureihe einen dritten Elektromotor aufweisen,
wobei die Elektromotoren der drei Varianten unterschiedlich groß ausgeführt sind, also unterschiedlichen Leistungsklassen angehören und jeweils an ihrer Abtriebsseite einen axial hervorstehende Zentrierring aufweisen, der jeweils einen unterschiedlichen Außendurchmesser aufweist,
wobei das Adapterteil zwischen dem Getriebe und dem Elektromotor angeordnet ist,
wobei das Adapterteil an seiner dem Elektromotor zugewandten Seite ein erstes, ein zweites und ein drittes Zentriermittel aufweist, wobei das Adapterteil an der vom Elektromotor abgewandten Seite mit dem Getriebe, insbesondere mit dem Gehäuse des Getriebes, verbunden ist,
wobei die Zentriermittel radial voneinander beabstandet sind und das zweite Zentriermittel radial zwischen dem ersten Zentriermittel und dem dritten Zentriermittel angeordnet ist,
wobei die radiale Richtung bezogen auf die Drehachse des Rotors des jeweiligen Elektromotors ist,
wobei der axial hervorragende Zentrierring des jeweiligen Elektromotors nur durch ein einziges der Zentriermittel des Adapterteils zentriert ist,
wobei als erstes Zentriermittel ein axial durch das Adapterteil durchgehendes Rundloch am Adapterteil ausgeformt ist,
wobei das Rundloch zur Aufnahme und Zentrierung des Zentrierrings des ersten Elektromotors der ersten Variante geeignet ausgeführt ist.

Aus der DE 10 2005 046 261 A1 ist eine Flanschverbindung bei einem Getriebemotor bekannt.

Aus der EP 1 795 754 A2 ist ein Universalflansch bekannt.

Aus der DE 10 2011 103 853 A1 ist ein Verfahren zum Herstellen eines Elektromotors bekannt.

Aus der DE 10 2013 011 816 A1 ist ein Getriebe mit einem ersten und einem zweiten Gehäuseteil bekannt.

Der Erfindung liegt daher die Aufgabe zugrunde, eine Getriebemotorbaureihe weiterzubilden, wobei eine kostengünstige Herstellung ermöglicht sein soll

Erfindungsgemäß wird die Aufgabe durch die Getriebemotorbaureihe mit den in Anspruch 1 angegebenen Merkmalen gelöst.

Somit besteht die Getriebemotorbaureihe aus Getriebemotoren, welche zwar dasselbe Adapterteil und dasselbe Getriebe aufweisen aber unterschiedliche Elektromotoren. Also ist dasselbe Getriebe mittels des Adapterteils mit unterschiedlichen Elektromotoren verbindbar. Bei der Herstellung des Getriebemotors wird also das Adapterteil mit dem Getriebe und einem Elektromotor verbunden, der aus einer Menge unterschiedlicher Elektromotoren ausgewählt wird. Somit ist mit einer geringen Anzahl von Komponenten eine hohe Varianz bereitstellbar.

Eine erste der Varianten der Getriebemotorbaureihe weist einen ersten Elektromotor auf. Eine zweite der Varianten der Getriebemotorbaureihe weist einen zweiten Elektromotor auf. Eine dritte der Varianten der Getriebemotorbaureihe weist einen dritten Elektromotor auf.

Die Elektromotoren sind unterschiedlich groß ausgeführt, gehören also einer unterschiedlichen Leistungsklasse an. Der Außenumfang der Elektromotoren ist an ihrem dem Adapterteil zugewandten Endbereich rund, insbesondere zylindrisch, ausgeführt.

Somit betrifft die Erfindung also eine Getriebemotorbaureihe mit drei Getriebemotoren. Davon weist der erste Getriebemotor einen ersten Elektromotor auf, bei welchem das erste Zentriermittel die Zentrierfunktion ausführt. Der zweite Getriebemotor weist einen zweiten Elektromotor auf, bei welchem das zweite Zentriermittel die Zentrierfunktion ausführt. Der dritte Getriebemotor weist einen dritten Elektromotor auf, bei welchem das dritte Zentriermittel die Zentrierfunktion über ein zwischen dem dritten Elektromotor und dem Adapterteil angeordnetes Adapterrahmenteil ausführt.

Vorzugsweise überdeckt jeder der Zentrierringe nur einen Radialabstandsbereich, der von dem vom Rotor überdeckten Radialabstandsbereich beabstandet ist.

Das Adapterteil weist also stets zwei ungenutzte Zentriermittel auf, die nur deshalb an ihm ausgeprägt sind, weil andere Varianten mit dem Adapterteil ebenfalls herstellbar sind.

Bei einer vorteilhaften Ausgestaltung überlappt der von dem Adapterteil in axialer Richtung überdeckte Bereich mit dem vom Rotor in axialer Richtung überdeckten Bereich. Von Vorteil ist dabei, dass der Rotor axial durch das Adapterteil hindurchragt.

Erfindungsgemäß sind
- als erstes Zentriermittel ein axial durch das Adapterteil durchgehendes Rundloch,
- als zweites Zentriermittel eine erste Zentrierstufe und
- als drittes Zentriermittel eine zweite Zentrierstufe
am Adapterteil ausgeformt. Von Vorteil ist dabei, dass drei Zentriermittel durch bloße Formgebung herstellbar sind.

Bei einer vorteilhaften Ausgestaltung erstrecken die Berandung des Rundlochs, die erste Zentrierstufe und zweite Zentrierstufe sich in Umfangsrichtung jeweils mit Unterbrechungen in Umfangsrichtung. Von Vorteil ist dabei, dass nicht nur Material einsparbar ist, sondern auch ein direkter Wärmeleitpfad vom drehbaren Teil, also Rotor über die luftgefüllte Unterbrechung zum Adapterteil hin vorsehbar ist. Dabei wird die Luft vom drehenden Teil mitbewegt, so dass eine konvektiv und aktiv getriebene Zirkulation der Luft und somit eine verbesserte Wärmeleitung bewirkt wird.

Bei einer vorteilhaften Ausgestaltung ist das Adapterteil mittels Schrauben, insbesondere mittels der Schraubenköpfen von Schrauben, zum Elektromotor hingedrückt,
insbesondere wobei die Schrauben jeweils in eine jeweilige insbesondere axial gerichtete Gewindebohrung des Elektromotors zumindest teilweise eingeschraubt sind. Von Vorteil ist dabei, dass eine einfache kostengünstige Befestigung vorsehbar ist.

Bei einer vorteilhaften Ausgestaltung weist das Adapterteil auf einem zweiten Radialabstand angeordnete Langlöcher und durchgehende auf einem ersten Radialabstand angeordnete Löcher, insbesondere Rundlöcher, auf,
insbesondere wobei der zweite Radialabstand größer als der erste Radialabstand ist,
wobei die Schrauben
   - entweder durch die Löcher hindurchragen, wobei die Langlöcher jeweils mittels Material des Adapterteils, insbesondere mittels eines jeweiligen Gießblatts, verschlossen sind,
   - oder durch die Langlöcher hindurchragen, wobei die Langlöcher durchgehend ausgeführt sind,
insbesondere wobei die Langlöcher jeweils in radialer Richtung sich weiter erstrecken als in Umfangsrichtung. Von Vorteil ist dabei, dass bei dem ersten und somit kleinsten Motor das Langloch radial über dem Motor hervorragt und trotzdem kein Öl austritt und kein Schmutz in den Innenraum des Adapterteils eintritt.

Bei einer vorteilhaften Ausgestaltung sind die Löcher und die Langlöcher jeweils in nach radial innen hervorragenden, am Adapterteil ausgeformten Vorsprüngen angeordnet. Von Vorteil ist dabei, dass die Schrauben in dem zwischen dem von den Zentriermitteln überdeckten Radialabstandsbereich vorsehbar sind.

Bei einer vorteilhaften Ausgestaltung umfasst und/oder enthält der von den Langlöchern überdeckte Radialabstandsbereich den größten Radialabstand der Berührfläche zwischen dem ersten Motor und dem Adapterteil. Von Vorteil ist dabei, dass die Langlöcher über den Motor radial herausragen und somit die Langlöcher verschlossen vorsehbar sind.

Erfindungsgemäß ist das Rundloch zur Aufnahme und Zentrierung des Zentrierrings des ersten Elektromotors geeignet ausgeführt. Von Vorteil ist dabei, dass eine einfache Zentrierung vorgesehen ist.

Erfindungsgemäß ist die erste Zentrierstufe zur Aufnahme und Zentrierung des Zentrierrings des zweiten Elektromotors geeignet ausgeführt, wobei der Zentrierring des zweiten Elektromotors einen größeren Durchmesser aufweist als der Zentrierring des ersten Elektromotors. Von Vorteil ist dabei, dass die Zentrierung einfach ausführbar ist.

Erfindungsgemäß ist die zweite Zentrierstufe zur Aufnahme und Zentrierung des Zentrierrings eines Adapterrahmenteils des dritten Elektromotors geeignet ausgeführt, wobei der Zentrierring des Adapterrahmenteils einen größeren Durchmesser aufweist als der Zentrierring des zweiten Elektromotors,
wobei am Adapterrahmenteil ein Rundloch zur Aufnahme und Zentrierung des Zentrierrings des dritten Elektromotors ausgeformt ist,
insbesondere wobei der vom Zentrierring des dritten Elektromotors überdeckte Radialabstandsbereich radial außerhalb des vom Zentrierring des zweiten Elektromotors überdeckte Radialabstandsbereich angeordnet ist. Von Vorteil ist dabei, dass der dritte Motor mittels des Adapterrahmenteils mit dem Adapterteil verbindbar ist, wie wenn der dritte Motor einen Zentrierring hätte, dessen Radialabstand zur zweiten Zentrierstufe des Adapterteils passen würde. Alternativ wäre auch der Motor mit dem Adapterrahmenteil einstückig ausführbar.

Bei einer vorteilhaften Ausgestaltung ist das Gehäuse des ersten Motors in der zweiten Zentrierstufe bei vorhandenem Spiel in radialer Richtung aufgenommen. Von Vorteil ist dabei, dass eine Abstützung aber keine Zentrierung an der zweiten Zentrierstufe ausführbar ist. Denn die Zentrierung des ersten Motors wird in dem Rundloch ausgeführt.

Bei einer vorteilhaften Ausgestaltung ist das Adapterteil ein Druckgussteil, insbesondere ein Zinkdruckgussteil. Von Vorteil ist dabei, dass die Maßhaltigkeit sehr hoch ist und somit eine Nachbearbeitung verzichtbar ist. Nur das Entfernen des Gießblattes bei Verwendung der Langlöcher ist auszuführen, was aber nicht als Nachbearbeitung bezeichenbar ist. Unter einer Nachbearbeitung wird hier eine Bearbeitung, wie Fräsen oder Schleifen, verstanden.

Bei einer vorteilhaften Ausgestaltung weist das Material, insbesondere Gießblatt, eine Wandstärke zwischen 0,2 mm und 0,8 mm, insbesondere zwischen 0,3 mm und 0,5 mm, auf. Von Vorteil ist dabei, dass beim Einbringen der Schrauben das Gießblatt entfernbar ist. Somit ist für das Entfernen keine Nachbearbeitung und auch kein sonstiger großer Aufwand notwendig.

Bei einer vorteilhaften Ausgestaltung weist das Adapterteil einen axial hervorstehenden, in eines der Langlöcher zumindest teilweise hineinragenden Vorsprung auf. Von Vorteil ist dabei, dass die Ausrichtung in Umfangsrichtung in definierter Weise ermöglicht ist.

Erfindungsgemäß ist mit wenigen Komponenten eine hohe Varianz von Getriebemotoren erreichbar. Denn das Adapterteil stellt schon drei unterschiedliche Zentrierungen zur Verfügung, wobei der jeweils ausgewählte Motor nur eine einzige Zentrierung verwendet. Die beiden anderen Zentrierungen sind für andere Motoren vorgesehen.

Die Erfindung wird nun anhand von schematischen Abbildungen näher erläutert:
In der Figur 1 ist ein erster Motor 1 mit einem verbundenen, unbearbeiteten Adapterteil 2, insbesondere Adaptergehäuseteil, zum Verbinden mit einem in den Figuren nicht gezeigten Getriebe im Längsschnitt dargestellt.
In der Figur 2 ist ein zur Figur 1 gehöriger Querschnitt dargestellt.
In der Figur 3 ist ein statt des Motors 1 mit dem bearbeiteten Adapterteil 2 verbundener zweiter Motor 31 im Längsschnitt gezeigt, dessen Außendurchmesser größer ist als der Außendurchmesser des ersten Motors 1.
In der Figur 4 ist ein zur Figur 3 gehöriger Querschnitt dargestellt.
In der Figur 5 ist ein statt des Motors 1 mit dem bearbeiteten Adapterteil 2 und ein Adapterrahmenteil 52 verbundener dritter Motor 51 im Längsschnitt gezeigt, dessen Außendurchmesser größer ist als der Außendurchmesser des zweiten Motors 31.
In der Figur 6 ist ein zur Figur 5 gehöriger Querschnitt dargestellt.
In der Figur 7 ist das unbearbeitete Adapterteil 2 in Draufsicht dargestellt.
In der Figur 8 ist ein zur Figur 7 gehöriger Querschnitt dargestellt.
In der Figur 9 ist das bearbeitete Adapterteil 2 in Draufsicht dargestellt.
In der Figur 10 ist ein zur Figur 9 gehöriger Querschnitt dargestellt.
In der Figur 11 ist das Adapterrahmenteil 52 in Draufsicht dargestellt.
In der Figur 12 ist ein zur Figur 11 gehöriger Querschnitt dargestellt.

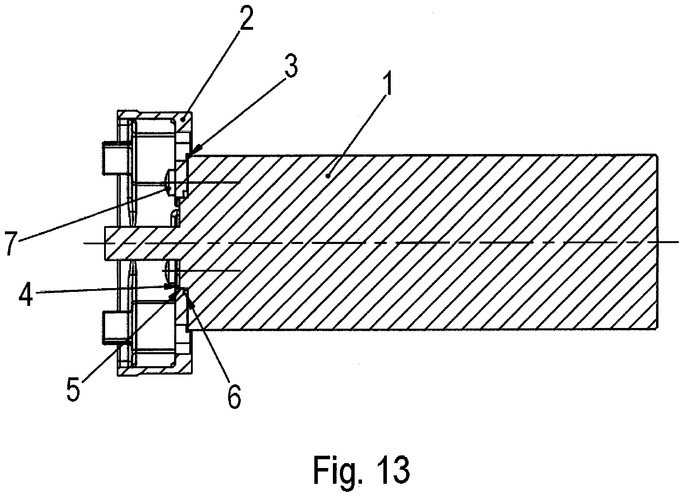

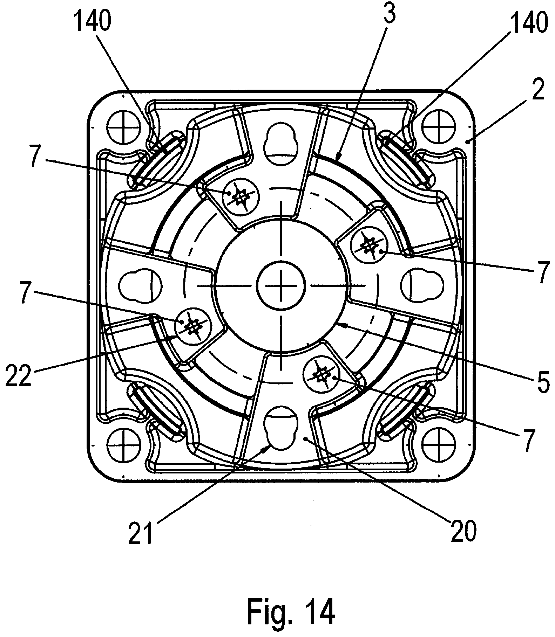

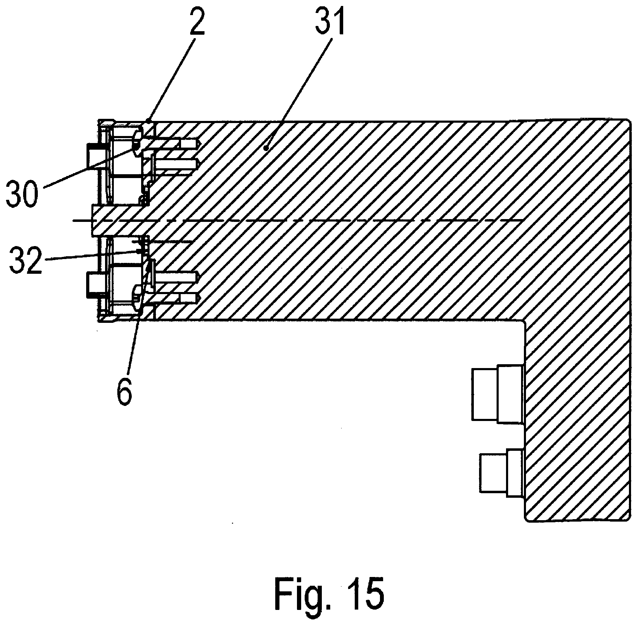

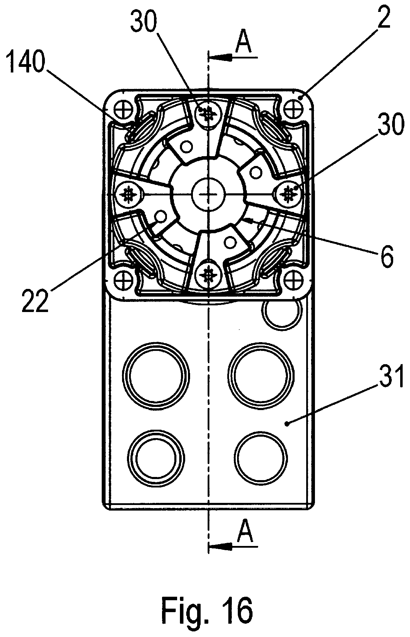

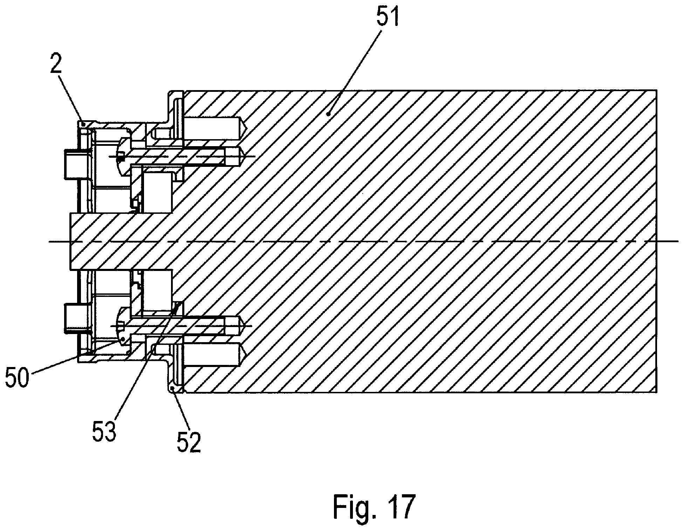

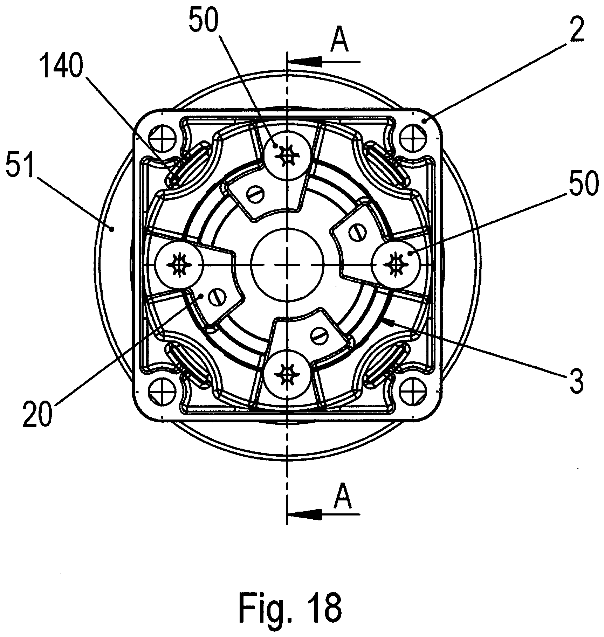

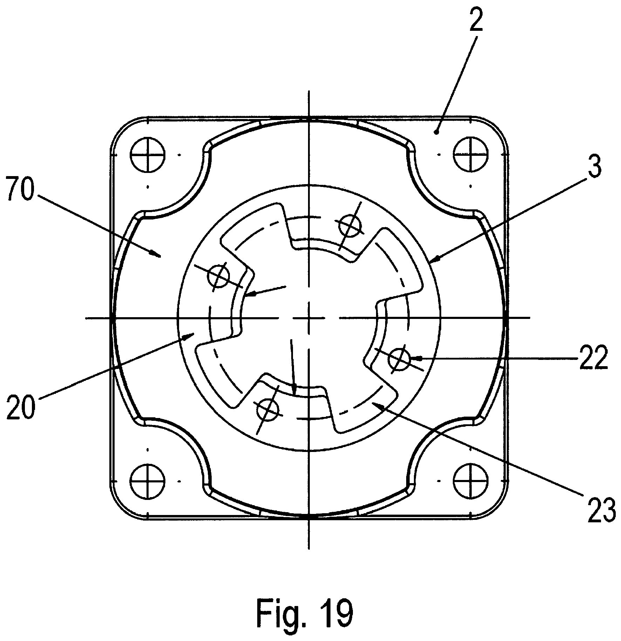

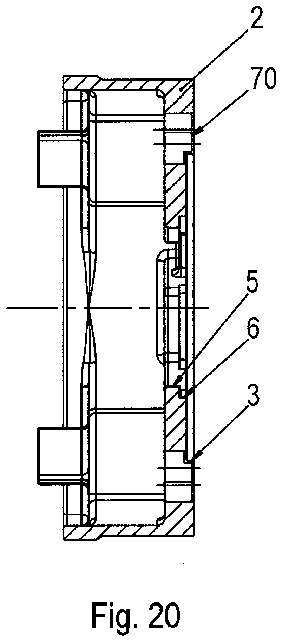

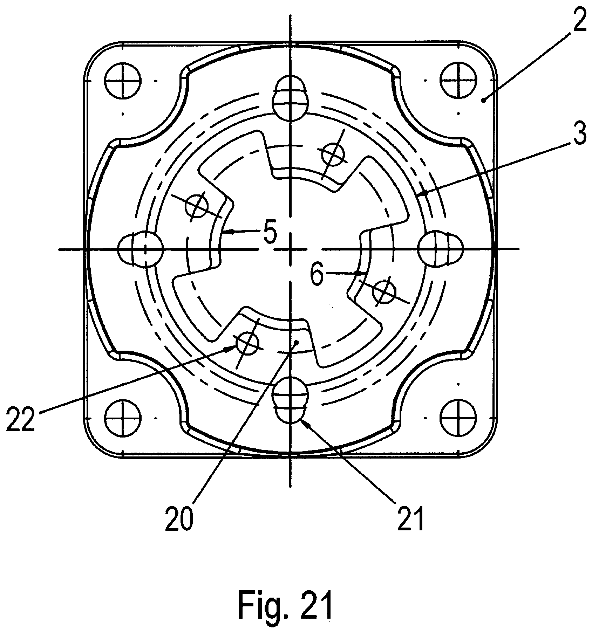

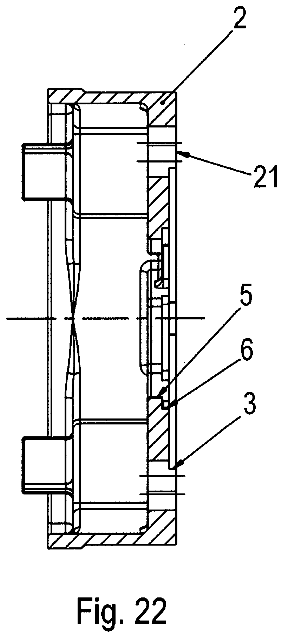

In den Figuren 13 bis 22 sind dieselben Ansichten wie in den Figuren 1 bis 12 für eine zweite Ausführung gezeigt, die sich nur durch um 45° gedrehte Zentrierrippen 140 zur getriebeseitigen Zentrierung und eine andere Formgebung von der in den Figuren 1 bis 12 gezeigten Ausführung unterscheiden.

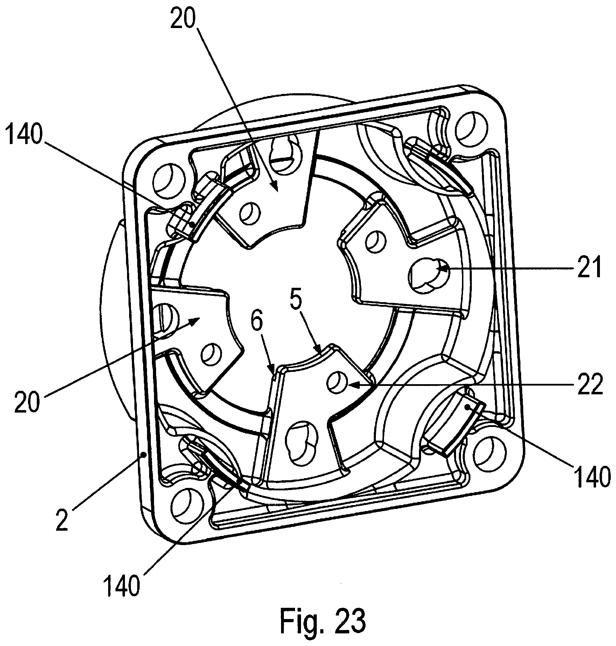

In der Figur 23 ist das bearbeitete Adapterteil 2 mit Zentrierrippen 140 in Schrägansicht in einer ersten Blickrichtung gezeigt.

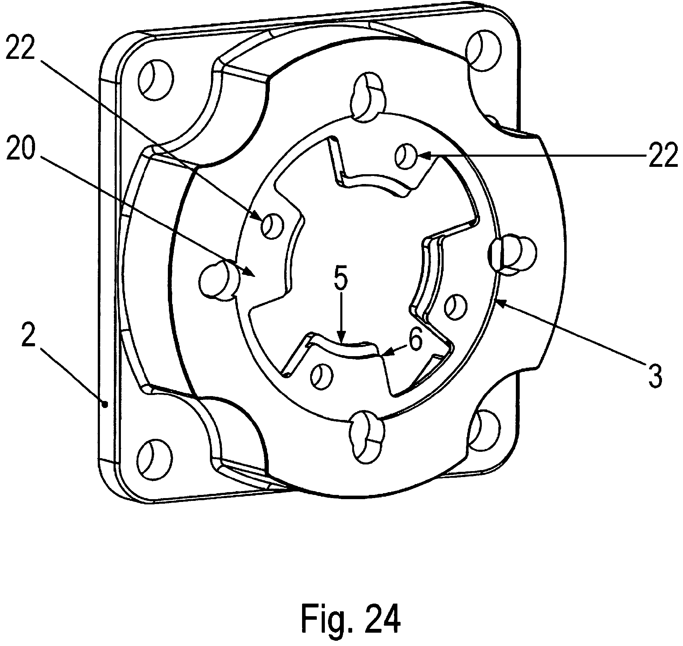

In der Figur 24 ist das Adapterteil 2 der Figur 23 aus einer anderen Blickrichtung gezeigt.

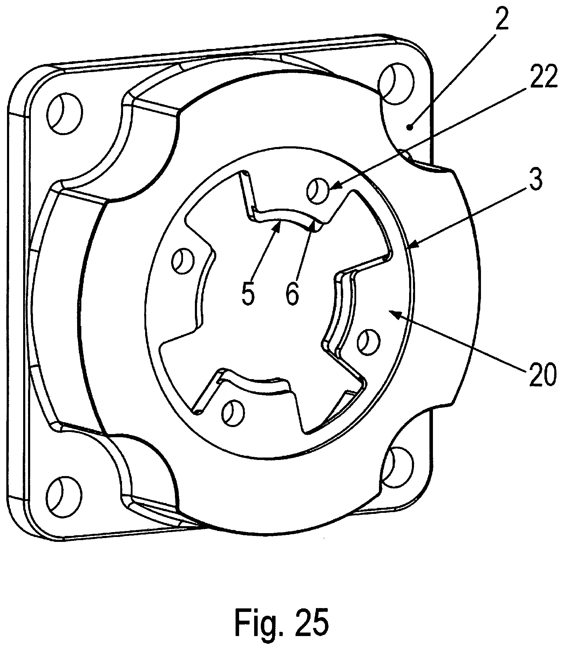

In der Figur 25 ist das unbearbeitete Adapterteil 2 mit Zentrierrippen 140 in Schrägansicht gezeigt.

Wie in den Figuren dargestellt weist der erfindungsgemäße Antrieb ein Getriebe auf, das von verschiedenen Motoren (1, 31, 51) über ein unbearbeitetes oder bearbeitetes Adapterteil 2 gegebenenfalls mit einem Adapterrahmenteil 52 antreibbar ist.

Das Adapterteil 2 weist für die verschieden großen Motoren (1, 31, 51) Zentriermittel, insbesondere zwei Zentrierstufen (3, 6) und eine Zentrierrundloch 5 auf, so dass das Adapterteil 2 für alle Motoren (1, 31, 51) verwendbar ist.

Vorteiligerweise ist das Adapterteil 2 aus Zinkdruckguss herstellbar, so dass keine Nachbearbeitung ausgeführt werden muss, da die Genauigkeit dieses Herstellverfahrens sehr hoch ist. Nur der dritte, also größte Motor wird erfindungsgemäß über ein Adapterrahmenteil 52 mit dem Adapterteil 2 verbunden.

Das Adapterteil 2 weist für die Verbindung mit den verschiedenen Motoren (1, 31, 51) nicht nur verschiedene Zentriermittel auf, sondern auch verschiedene axial durchgehende Ausnehmungen, insbesondere Bohrbilder, auf. Hierzu ist eine der Ausnehmungen als Langloch 21 ausgeführt.

Das Getriebe ist vorzugsweise als Planetengetriebe ausgeführt und in den Figuren aber nicht näher dargestellt. Das Adapterteil 2 ist mit seiner dem Getriebe zugewandten Seite mit dem Getriebe verbunden. Motorseitig bietet die am Adapterteil 2 ausgeführt Schnittstelle unterschiedliche Merkmale, wie Zentriermittel, insbesondere Zentrierrundloch 5 und Zentrierstufen (6, 3) unterschiedlichen Durchmessers.

Jeder der Motoren (1, 31, 51) weist erfindungsgemäß A-seitig, also an seiner Abtriebsseite, einen axial hervorstehenden Zentrierring (4, 32, 53) auf, der allerdings einen jeweils unterschiedlichen Außendurchmesser aufweist.

Der am ersten oder zweiten Motor (1, 31) hervorstehende Zentrierring (4, 32) oder der an dem Adapterrahmenteil 52 axial hervorstehende Zentrierring 120 wird an einem jeweiligen Zentriermittel, wie Zentrierrundloch 5 oder Zentrierstufe (6, 3) des Adapterteils 2 aufgenommen und ausgerichtet. In axialer Richtung wird der jeweilige Motor (1, 31) mittels Schrauben (7, 30, 50) auf Block geschraubt.

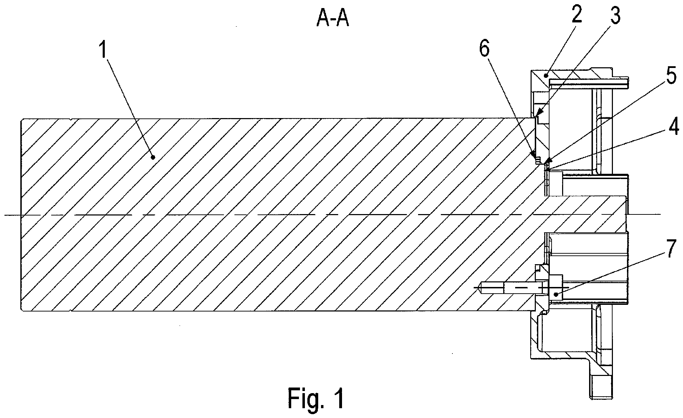

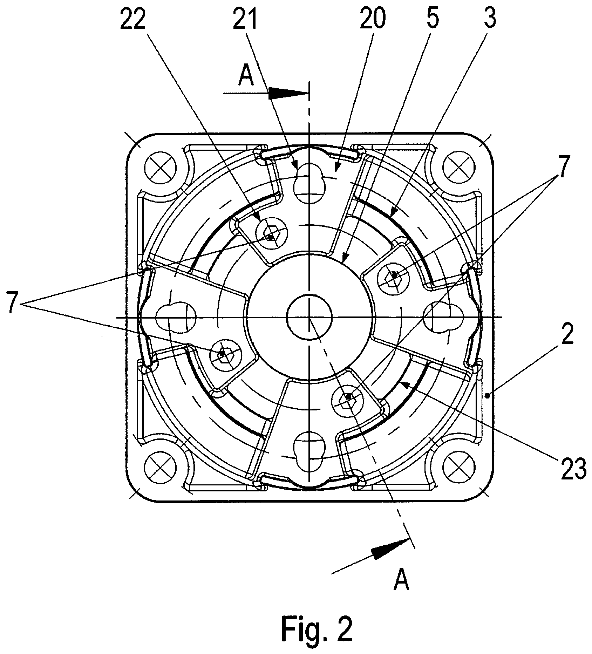

Wie in Figur 1 und Figur 2 dargestellt, weist der erste Motor 1, insbesondere ein Elektromotor, eine zylindrische Außenform auf, aus der axial ein Zentrierring 4 und ein Rotor zum Adapterteil 2 hin und/oder zum Getriebe hin hervorragen. Der Rotor ist dabei drehbar gelagert zum Zentrierring (4, 32, 53), der am ansonsten im Wesentlichen zylindrischen Gehäuse hervorragt.

Das Adapterteil 2 weist eine gestuft ausgeführte Ausnehmung auf, insbesondere die einer Stufenbohrung gleicht, aber unbearbeitet ist.

Vorzugsweise ist das Adapterteil 2 als Zinkdruckgussteil hergestellt und danach unbearbeitet, da diese Druckgussherstellung mit einer ausreichenden Genauigkeit ausführbar ist.

Die gestuft ausgeführte Ausnehmung weist einen in Umfangsrichtung unterbrochenen Rand eines axial durchgehenden Rundlochs 5 auf. Das Rundloch 5 fungiert als erstes Zentriermittel für den Zentrierring 4 des ersten Motors 1. Der Zentrierring 4 des ersten Motors 1 ist in diesem axial durchgehenden Rundloch 5 aufgenommen und ragt zumindest teilweise hinein. Somit ist der erste Motor 1 zentriert am Rundloch 5.

Axial liegt der erste Motor mit seinem Gehäuse, insbesondere mit seinem größten Durchmesser des Berührbereichs zum Adapterteil 2 hin, an der zweiten Zentrierstufe 3 des Adapterteils 2 an und ist mit durch das Adapterteil 2 durchgehenden, in Gewindebohrungen des ersten Motors 1 eingeschraubten Schrauben 7, insbesondere von deren Schraubenköpfen, angedrückt.

Die Schrauben 7 sind dabei durch axial durchgehende Rundlöcher 22 des Adapterteils 2 gesteckt, wobei diese Rundlöcher 22 auf einem ersten Radialabstand bezogen auf die Drehachse der Rotorwelle angeordnet sind. Dabei ist der erste Radialabstand radial außerhalb des Zentrierrings 4 und somit auch radial außerhalb des Rundlochs 5 angeordnet.

Der radiale Außenrand des Gehäuses des ersten Motors 1 ist an der zweiten Zentrierstufe 3 des Adapterteils 2 axial angedrückt, hat aber radiales Spiel, weil die Zentrierung des ersten Motors 1 über das Rundloch 5 erfolgt und die Zentrierstufe 3 nur zur axialen Begrenzung verwendet wird.

Die zweite Zentrierstufe 3 ist auf einem dritten Radialabstand angeordnet, der radial außerhalb der beiden anderen Zentriermittel, also Rundloch 5 und erste Zentrierstufe 6, angeordnet ist.

Das Rundloch 5 ist auf dem ersten Radialabstand angeordnet. Die erste Zentrierstufe 6 ist auf dem zweiten Radialabstand angeordnet und die zweite Zentrierstufe 3 ist auf dem dritten Radialabstand angeordnet.

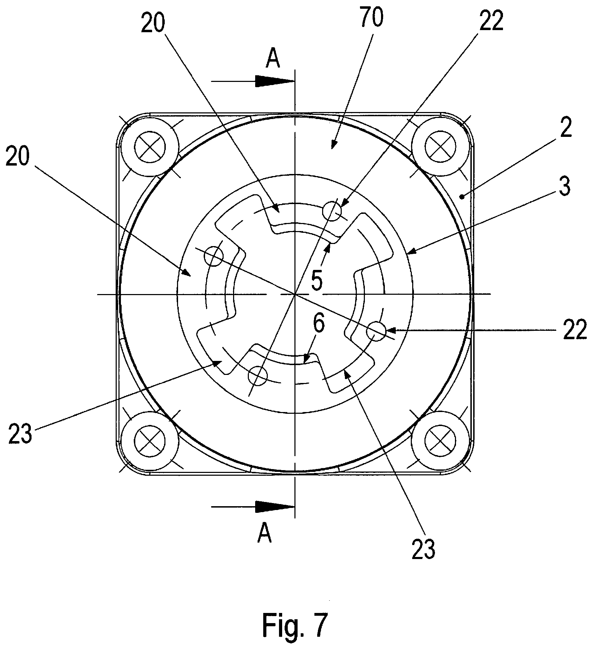

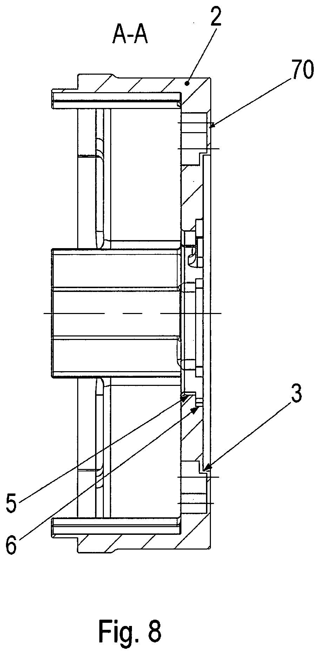

Das in Figur 2 gezeigte Langloch 21 überdeckt einen Radialabstandsbereich, welcher den dritten Radialabstand umfasst. Allerdings ist dieses Langloch 21 mit einem Gießblatt 70 verschlossen, wie in Figur 7 und 8 gezeigt ist, da das Adapterteil zur Verbindung mit dem ersten Motor 1 in Urform verwendet wird. Das Gießblatt weist eine Wandstärke zwischen 0,2 mm und 0,8 mm auf, vorzugsweise zwischen 0,3 mm und 0,5 mm.

Das Langloch 21 ist also von der Getriebeseite her schon im Adapterteil 21 vorgeformt, aber noch mit einem Gießblatt 70 zum ersten Motor 1 hin verschlossen. Dies ist daher wichtig, da der vom Langloch 21 und auch vom Gießblatt 70 überdeckte Radialabstandsbereich den Außendurchmesser des ersten Motors 1 umfasst. Wenn das Gießblatt 70 nicht vorhanden wäre, wäre das Langloch axial durchgehend durch das Adapterteil 2 ausgeführt und es könnte beispielsweise bei Leckage des Getriebes aus dem Getriebe in den Innenraum des Adapters ausgetretenes Öl durch das Langloch 21 in die Umgebung austreten. Somit wäre der Antrieb dann nicht mehr öldicht.

Die erste Zentrierstufe 6 ist radial zwischen dem Rundloch 5 und der zweiten Zentrierstufe 3 angeordnet.

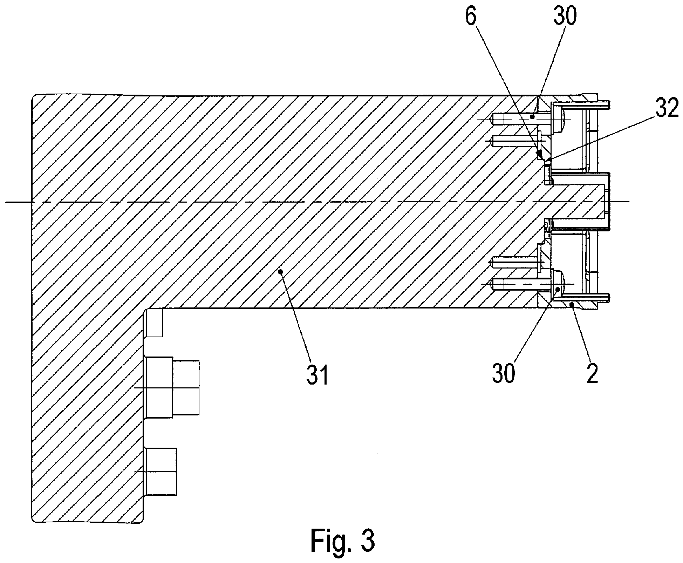

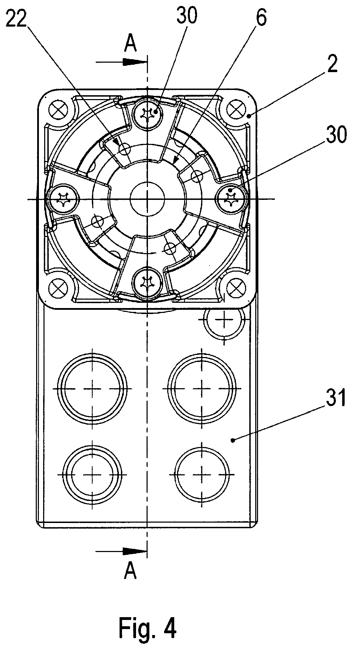

Wie in Figur 3 und Figur 4 gezeigt, ist der zweite Motor 31, insbesondere ein Elektromotor, mit seinem Zentrierring 32, der aber einen größeren Durchmesser aufweist als der Zentrierring 4 des ersten Motors 1, in der ersten Zentrierstufe 6 des Adapterteils 2 aufgenommen und liegt dort derart an, so dass der zweite Motor 31 zum Adapterteil 2 hin zentriert ist. Dabei ist kein wesentliches radiales Spiel vorhanden. Denn der Zentrierring 32 ist in die erste Zentrierstufe 6 eingepresst und daher an dieser Zentrierstufe 6 sowohl radial als auch axial positioniert.

In axialer Richtung liegt der zweite Motor 31 also am Adapterteil 2 an, so dass die relative Positionierung des zweiten Motors 31 zum Adapterring 2 mit hoher Genauigkeit ausführbar ist.

Mittels Schrauben 30, deren Schraubenköpfe einen Radialabstand überdecken, welcher den von der zweiten Zentrierstufe 3 überdeckten Radialabstandsbereich umfasst, ist das Adapterteil 2 von den Schraubenköpfen der Schrauben 30 gegen das Gehäuse des ersten Motors 1 angedrückt.

Der Außendurchmesser des Gehäuses des zweiten Motors 31, insbesondere der Außendurchmesser des das Adapterteil 2 berührenden Oberflächenbereichs des zweiten Motors 31, ist größer als der Außendurchmesser des Gehäuses des ersten Motors 1, insbesondere der Außendurchmesser des das Adapterteil 2 berührenden Oberflächenbereichs des ersten Motors 1.

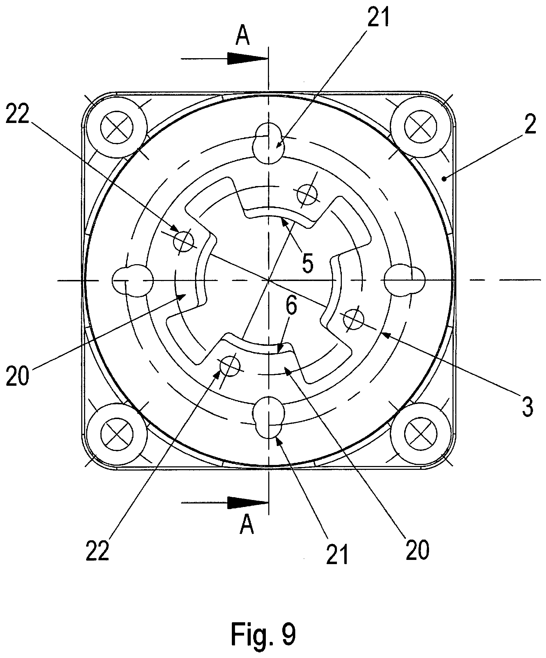

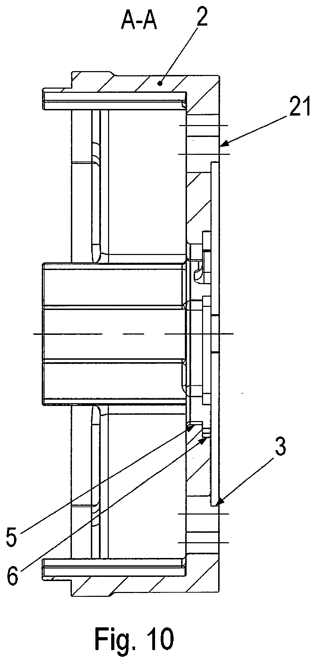

In dem Ausführungsbeispiel nach Figur 3 und Figur 4 ist das Langloch 21 axial durchgehend ausgeführt, indem das Gießblatt 70 entfernt wurde, wie auch in Figur 9 und 10 dargestellt.

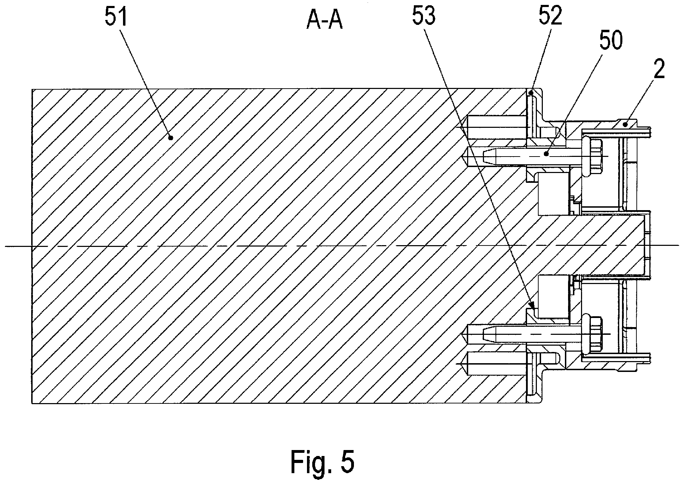

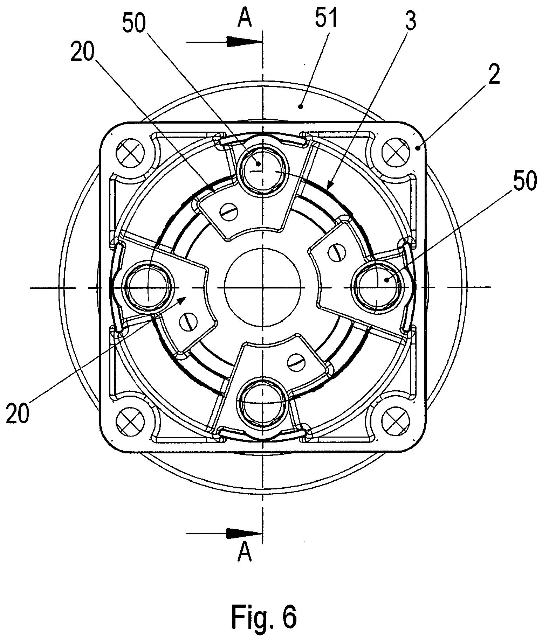

Das Langloch 21 ermöglicht auch Schrauben 50 durchzuführen durch das Adapterteil 2, wie in Figur 5 und Figur 6 gezeigt. Auf dieses Weise ist der dritte Motor 51 verbindbar.

Allerdings ist axial zwischen Adapterteil 2 und drittem Motor 51 ein Adapterrahmenteil 52 angeordnet, durch welches die Schrauben 50 ebenfalls hindurchragen.

Der Außendurchmesser des Gehäuses des dritten Motors 51, insbesondere der Außendurchmesser des das Adapterrahmenteil 52 berührenden Oberflächenbereichs des dritten Motors 51, ist größer als der Außendurchmesser des Gehäuses des zweiten Motors 31, insbesondere der Außendurchmesser des das Adapterteil 2 berührenden Oberflächenbereichs des zweiten Motors 31.

Wiederum ist also das Gießblatt 70 entfernt, insbesondere durchstoßen.

Die Zentrierung des dritten Motors 51 zum Adapterrahmenteil 52 hin erfolgt durch das Aufnehmen des Zentrierrings 53 des dritten Motors 51 in einem axial durchgehenden zylindrisch geformten Loch des Adapterrahmenteils 52. Axial liegt das Adapterrahmenteil 52 am Gehäuse des dritten Motors 51 an.

Das Adapterrahmenteil 52 selbst wiederum ist zum Adapterteil 2 hin zentriert durch einen am Adapterrahmenteil 52 ausgeformten, axial hervorragenden Zentrierring 120, der in der zweiten Zentrierstufe 3 spielfrei anliegt, so dass das Adapterrahmenteil 52 zum Adapterteil 2 hin zentriert ist.

Die axial durchgehenden Löcher für die Schrauben (7, 30, 50) sind jeweils in den nach radial innen hervorragenden Vorsprüngen 20 angeordnet, welche in Umfangsrichtung voneinander insbesondere regelmäßig beabstandet sind. Vorzugsweise sind die Vorsprünge 20 formgleich und/oder baugleich ausgeführt. Auf diese Weise ist in Umfangsrichtung zwischen den Vorsprüngen 20 jeweils eine Ausnehmung 23 am Adapterteil 2 ausgeformt, die zur Verbesserung der Maßhaltigkeit des Rundlochs 5 und der ersten Zentrierstufe 6 beiträgt, insbesondere infolge des verringerten Umfangs in Umfangsrichtung jeder Zentrierstufe (5, 6) und somit Verringerung statistisch möglicher Ausreißer. Außerdem ist somit ein durch die luftgefüllte jeweilige Ausnehmung ein Wärmetransport vom Rotor des Motors (1, 31, 51) zum Adapterteil 2 hin ermöglicht und dadurch eine verbesserte Entwärmung des Rotors erreichbar. Hauptquelle der Wärme ist das im Gehäuse des jeweiligen Motors (1, 31, 51) aufgenommene Lager des Rotors des jeweiligen Motors (1, 31, 51).

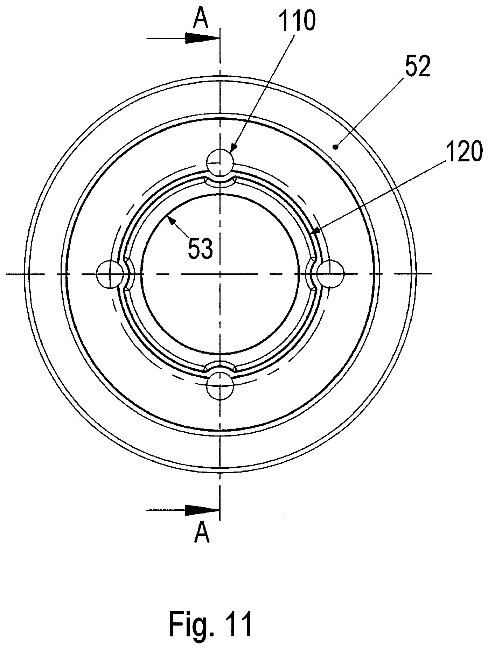

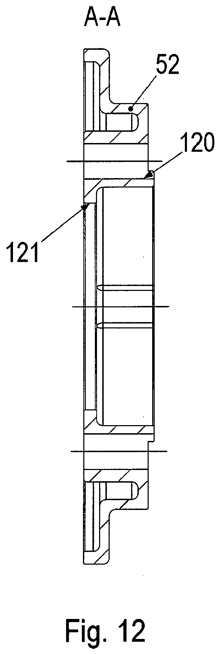

Das Adapterrahmenteil 52 ist in Figur 11 und Figur 12 näher dargestellt. Die als mittig angeordnetes, axial durchgehendes Rundloch ausgeformte Ausnehmung des Adapterrahmenteils 52 nimmt den Zentrierring 53 des dritten Motors 51 auf und zentriert dabei das Adapterrahmenteil 52 zum dritten Motor 51 hin. Auf der vom dritten Motor 51 abgewandten Seite des Adapterrahmenteils 52 ist der am Adapterrahmenteil 52 ausgeformte Zentrierring 120 in der zweiten Zentrierstufe 3 des Adapterteils 2 aufgenommen. Somit ist das Adapterrahmenteil 52 zum Adapterteil 2 hin zentriert.

Bei weiteren erfindungsgemäßen Ausführungsbeispielen weist das Adapterteil 2 eine axial hervorstehende, ins Langloch 21 zumindest teilweise hineinragende Nase auf, so dass die relative, insbesondere in Umfangsrichtung gemessene, Ausrichtung des Adapterteils 2 zum Adapterrahmenteil 52 hin formschlüssig festlegbar ist.

Bei weiteren erfindungsgemäßen Ausführungsbeispielen ist das Getriebe alternativ aber auch als Parallelwellengetriebe oder Winkelgetriebe ausgeführt.

### Bezugszeichenliste

1 erster Motor
2 Adapterteil, insbesondere Adaptergehäuseteil
3 zweite Zentrierstufe am Adapterteil 2
4 Zentrierring des ersten Motors 1
5 Rundloch, insbesondere durch das Adapterteil 2 durchgehendes Rundloch
6 erste Zentrierstufe am Adapterteil 2
7 Schraube
20 nach radial innen hervorragender Vorsprung
21 Langloch
22 durchgehende Ausnehmung, insbesondere Loch, für Schraube 7
23 Ausnehmung am Adapterteil 2
30 Schraube
31 zweiter Motor
32 Zentrierring des zweiten Motors 31
50 Schraube
51 dritter Motor
52 Adapterrahmenteil
53 Zentrierring des dritten Motors 51
70 Gießblatt
120 Zentrierring des Adapterrahmenteils 52 für dritte Zentrierstufe 3 des Adapterteils 2
121 Rundloch für Zentrierung des Zentrierrings 53 des dritten Motors 51

## Patentansprüche

1. Getriebemotorbaureihe mit Adapterteil (2), Getriebe und Getriebemotoren,
wobei die Getriebemotoren der Getriebemotorbaureihe jeweils dasselbe Adapterteil (2) sowie jeweils dasselbe Getriebe und wahlweise entweder, gemäß einer ersten Variante der Getriebemotorbaureihe einen ersten Elektromotor (1) oder gemäß einer zweiten Variante der Getriebemotorbaureihe einen zweiten Elektromotor (31) oder gemäß einer dritten Variante der Getriebemotorbaureihe einen dritten Elektromotor (51) aufweisen,
wobei die Elektromotoren der drei Varianten unterschiedlich groß ausgeführt sind, also unterschiedlichen Leistungsklassen angehören und jeweils an ihrer Abtriebsseite einen axial hervorstehende Zentrierring (4) aufweisen, der jeweils einen unterschiedlichen Außendurchmesser aufweist,
wobei das Adapterteil (2) zwischen dem Getriebe und dem Elektromotor (1) angeordnet ist,
wobei das Adapterteil (2) an seiner dem Elektromotor (1) zugewandten Seite ein erstes, ein zweites und ein drittes Zentriermittel aufweist, wobei das Adapterteil (2) an der vom Elektromotor (1) abgewandten Seite mit dem Getriebe, insbesondere mit dem Gehäuse des Getriebes, verbunden ist,
wobei der Elektromotor (51) der dritten, größten Variante über ein Adapterrahmenteil (52) mit dem Adapterteil (2) verbunden ist,
wobei die Zentriermittel radial voneinander beabstandet sind und das zweite Zentriermittel radial zwischen dem ersten Zentriermittel und dem dritten Zentriermittel angeordnet ist,
wobei die radiale Richtung bezogen auf die Drehachse des Rotors des jeweiligen Elektromotors ist,
wobei der axial hervorragende Zentrierring (4) des jeweiligen Elektromotors nur durch ein einziges der Zentriermittel des Adapterteils (2) zentriert ist,
wobei
- als erstes Zentriermittel ein axial durch das Adapterteil (2) durchgehendes Rundloch (5),
- als zweites Zentriermittel eine erste Zentrierstufe (6) und
- als drittes Zentriermittel eine zweite Zentrierstufe (3)
am Adapterteil (2) ausgeformt sind,
wobei das Rundloch (5) zur Aufnahme und Zentrierung des Zentrierrings des ersten Elektromotors der ersten Variante geeignet ausgeführt ist,
wobei die erste Zentrierstufe (6) zur Aufnahme und Zentrierung des Zentrierrings des zweiten Elektromotors der zweiten Variante geeignet ausgeführt ist, wobei der Zentrierring (32) des zweiten Elektromotors der zweiten Variante einen größeren Durchmesser aufweist als der Zentrierring (4) des ersten Elektromotors der ersten Variante,
wobei das Adapterrahmenteil (52) einen Zentrierring (120) aufweist, wobei die zweite Zentrierstufe (3) zur Aufnahme und Zentrierung des Zentrierrings (120) des Adapterrahmenteils (52) des dritten Elektromotors der dritten Variante geeignet ausgeführt ist, wobei der Zentrierring (120) des Adapterrahmenteils (52) einen größeren Durchmesser aufweist als der Zentrierring (32) des zweiten Elektromotors der zweiten Variante, wobei am Adapterrahmenteil (52) ein Rundloch (5) zur Aufnahme und Zentrierung des Zentrierrings (53) des dritten Elektromotors der dritten Variante ausgeformt ist.

2. Getriebemotorbaureihe nach Anspruch 1,
**dadurch gekennzeichnet, dass**
der von dem Adapterteil (2) in axialer Richtung überdeckte Bereich überlappt mit dem vom Rotor in axialer Richtung überdeckten Bereich.

3. Getriebemotor nach Anspruch 1,
**dadurch gekennzeichnet, dass**
die Berandung des Rundlochs (5), die erste Zentrierstufe (6) und zweite Zentrierstufe (3) sich in Umfangsrichtung jeweils mit Unterbrechungen in Umfangsrichtung erstrecken.

4. Getriebemotorbaureihe nach Anspruch 1,
**dadurch gekennzeichnet, dass**
das Adapterteil (2) mittels Schrauben (7, 30, 50), insbesondere mittels der Schraubenköpfe der Schrauben (7, 30, 50), zum Elektromotor (1) hingedrückt ist,
insbesondere wobei die Schrauben (7, 30, 50) jeweils in eine jeweilige insbesondere axial gerichtete Gewindebohrung des Elektromotors zumindest teilweise eingeschraubt sind.

5. Getriebemotorbaureihe nach einem der vorangegangenen Ansprüche,
**dadurch gekennzeichnet, dass**
das Adapterteil (2) auf einem zweiten Radialabstand angeordnete Langlöcher und durchgehende auf einem ersten Radialabstand angeordnete Löcher, insbesondere Rundlöcher, aufweist,
insbesondere wobei der zweite Radialabstand größer als der erste Radialabstand ist,
wobei die Schrauben (7, 30, 50)
- entweder durch die Löcher hindurchragen, wobei die Langlöcher jeweils mittels Material des Adapterteils (2), insbesondere mittels eines jeweiligen Gießblatts (70), verschlossen sind,
- oder durch die Langlöcher hindurchragen, wobei die Langlöcher durchgehend ausgeführt sind,
insbesondere wobei die Langlöcher jeweils in radialer Richtung sich weiter erstrecken als in Umfangsrichtung.

6. Getriebemotorbaureihe nach Anspruch 5,
**dadurch gekennzeichnet, dass**
die Löcher und die Langlöcher jeweils in nach radial innen hervorragenden, am Adapterteil (2) ausgeformten Vorsprüngen angeordnet sind.

7. Getriebemotorbaureihe nach Anspruch 5 oder 6,
**dadurch gekennzeichnet, dass**
der von den Langlöchern überdeckte Radialabstandsbereich den größten Radialabstand der Berührfläche zwischen dem ersten Motor und dem Adapterteil (2) umfasst und/oder enthält.

8. Getriebemotorbaureihe nach einem der vorangegangenen Ansprüche,
**dadurch gekennzeichnet, dass**
das Gehäuse des ersten Motors in der zweiten Zentrierstufe (3) bei vorhandenem Spiel in radialer Richtung aufgenommen ist.

9. Getriebemotorbaureihe nach einem der vorangegangenen Ansprüche,
**dadurch gekennzeichnet, dass**
das Adapterteil (2) ein Druckgussteil ist, insbesondere ein Zinkdruckgussteil.

10. Getriebemotorbaureihe nach einem der vorangegangenen Ansprüche,
**dadurch gekennzeichnet, dass**
das Material, insbesondere Gießblatt (70), des Adapterteils (2) eine Wandstärke zwischen 0,2 mm und 0,8 mm, insbesondere zwischen 0,3 mm und 0,5 mm, aufweist.

11. Getriebemotorbaureihe nach Anspruch 6,
**dadurch gekennzeichnet, dass**
das Adapterteil (2) einen axial hervorstehenden, in eines der Langlöcher zumindest teilweise hineinragenden Vorsprung (20) aufweist.

## Claims

1. A geared motor series with adapter part (2), gear unit and geared motors,
wherein the geared motors of the geared motor series in each case have the same adapter part (2) and also in each case the same gear unit and as desired either according to a first variant of the geared motor series a first electric motor (1), or according to a second variant of the geared motor series a second electric motor (31), or according to a third variant of the geared motor series a third electric motor (51),
wherein the electric motors of the three variants are of different sizes, i.e. belong to different performance classes and in each case have on their output sides an axially projecting centring ring (4) which has a different external diameter in each case,
wherein the adapter part (2) is arranged between the gear unit and the electric motor (1),
wherein the adapter part (2) has on its side which faces the electric motor (1) a first, a second and a third centring means, wherein the adapter part (2) on the side which faces away from the electric motor (1) is connected to the gear unit, in particular to the housing of the gear unit,
wherein the electric motor (51) of the third, largest, variant is connected to the adapter part (2) by way of an adapter frame part (52),
wherein the centring means are spaced apart radially from each other and the second centring means is arranged radially between the first centring means and the third centring means,
wherein the radial direction is relative to the axis of rotation of the rotor of the respective electric motor,
wherein the axially protruding centring ring (4) of the respective electric motor is centred only by a single one of the centring means of the adapter part (2),
wherein
- as first centring means, a round hole (5) which passes axially through the adapter part (2),
- as second centring means, a first centring step (6), and
- as third centring means, a second centring step (3)
are formed on the adapter part (2),
wherein the round hole (5) is embodied suitably for receiving and centring the centring ring of the first electric motor of the first variant,
wherein the first centring step (6) is embodied suitably for receiving and centring the centring ring of the second electric motor of the second variant, wherein the centring ring (32) of the second electric motor of the second variant has a larger diameter than the centring ring (4) of the first electric motor of the first variant,
wherein the adapter frame part (52) has a centring ring (120), wherein the second centring step (3) is embodied suitably for receiving and centring the centring ring (120) of the adapter frame part (52) of the third electric motor of the third variant, wherein the centring ring (120) of the adapter frame part (52) has a larger diameter than the centring ring (32) of the second electric motor of the second variant, wherein a round hole (5) for receiving and centring the centring ring (53) of the third electric motor of the third variant is formed on the adapter frame part (52).

2. A geared motor series according to claim 1,
**characterised in that**
the region covered in the axial direction by the adapter part (2) overlaps with the region covered in the axial direction by the rotor.

3. A geared motor according to claim 1,
**characterised in that**
the margin of the round hole (5), the first centring step (6) and the second centring step (3) extend in the peripheral direction in each case with interruptions in the peripheral direction.

4. A geared motor series according to claim 1,
**characterised in that**
the adapter part (2) is pressed by means of screws (7, 30, 50), in particular by means of the screw heads of the screws (7, 30, 50), towards the electric motor (1),
in particular with the screws (7, 30, 50) in each case being at least partly screwed into a respective, in particular axially directed, threaded bore in the electric motor.

5. A geared motor series according to one of the preceding claims,
**characterised in that**
the adapter part (2) has elongate holes arranged at a second radial distance and continuous holes, in particular round holes, arranged at a first radial distance,
in particular with the second radial distance being greater than the first radial distance,
wherein the screws (7, 30, 50)
- either protrude through the holes, with the elongate holes in each case being closed by means of material of the adapter part (2), in particular by means of a respective casting flash (70),
- or protrude through the elongate holes, with the elongate holes being embodied as continuous,
in particular with the elongate holes in each case extending further in the radial direction than in the peripheral direction.

6. A geared motor series according to claim 5,
**characterised in that**
the holes and the elongate holes are in each case arranged in projections protruding radially inwards formed on the adapter part (2).

7. A geared motor series according to claim 5 or 6,
**characterised in that**
the radial distance region covered by the elongate holes comprises and/or contains the greatest radial distance of the face of contact between the first motor and the adapter part (2).

8. A geared motor series according to one of the preceding claims,
**characterised in that**
the housing of the first motor is received in the second centring step (3) when there is play in the radial direction.

9. A geared motor series according to one of the preceding claims,
**characterised in that**
the adapter part (2) is a diecast part, in particular a zinc diecast part.

10. A geared motor series according to one of the preceding claims,
**characterised in that**
the material, in particular casting flash (70), of the adapter part (2) has a wall thickness of between 0.2 mm and 0.8 mm, in particular between 0.3 mm and 0.5 mm.

11. A geared motor series according to claim 6,
**characterised in that**
the adapter part (2) has an axially projecting projection (20) which protrudes at least partly into one of the elongate holes.

## Revendications

1. Série de motoréducteurs avec pièce d'adaptation (2), réducteur et motoréducteurs, les motoréducteurs de la série de motoréducteurs comportant chacun la même pièce d'adaptation (2) ainsi que chacun le même réducteur et, au choix, soit, selon une première variante de la série de motoréducteurs, un premier moteur électrique (1), soit, selon une deuxième variante de la série de motoréducteurs, un deuxième moteur électrique (31), soit, selon une troisième variante de la série de motoréducteurs, un troisième moteur électrique (51), les moteurs électriques des trois variantes étant réalisés de tailles différentes, c'est-à-dire appartenant à des classes de puissance différentes et comportant chacun sur leur côté de sortie une bague de centrage (4) saillant axialement, qui présente un diamètre extérieur différent dans chaque cas, la pièce d'adaptation (2) étant disposée entre le réducteur et le moteur électrique (1), la pièce d'adaptation (2) présentant sur son côté orienté vers le moteur électrique (1) un premier, un deuxième et un troisième moyen de centrage, la pièce d'adaptation (2) étant reliée sur le côté opposé au moteur électrique (1) au réducteur, en particulier au boîtier du réducteur, le moteur électrique (51) de la troisième, plus grande variante étant relié à la pièce d'adaptation (2) par une pièce de cadre d'adaptation (52), les moyens de centrage étant espacés radialement les uns des autres et le deuxième moyen de centrage étant disposé radialement entre le premier moyen de centrage et le troisième moyen de centrage,
la direction radiale étant définie par rapport à l'axe de rotation du rotor du moteur électrique concerné,
la bague de centrage (4) saillante axialement du moteur électrique concerné étant centrée uniquement par un seul des moyens de centrage de la pièce d'adaptation (2),
où
- le premier moyen de centrage est un trou circulaire (5) traversant axialement la pièce d'adaptation (2),
- le deuxième moyen de centrage est un premier épaulement de centrage (6), et
- le troisième moyen de centrage est un deuxième épaulement de centrage (3)
formés sur la pièce d'adaptation (2),
le trou circulaire (5) étant conçu pour recevoir et centrer la bague de centrage du premier moteur électrique de la première variante,
le premier épaulement de centrage (6) étant conçu pour recevoir et centrer la bague de centrage du deuxième moteur électrique de la deuxième variante, la bague de centrage (32) du deuxième moteur électrique de la deuxième variante présentant un diamètre plus grand que la bague de centrage (4) du premier moteur électrique de la première variante,
la pièce de cadre d'adaptation (52) comportant une bague de centrage (120), le deuxième épaulement de centrage (3) étant conçu pour recevoir et centrer la bague de centrage (120) de la pièce de cadre d'adaptation (52) du troisième moteur électrique de la troisième variante, la bague de centrage (120) de la pièce de cadre d'adaptation (52) présentant un diamètre plus grand que la bague de centrage (32) du deuxième moteur électrique de la deuxième variante, et sur la pièce de cadre d'adaptation (52) un trou circulaire (5) étant formé pour recevoir et centrer la bague de centrage (53) du troisième moteur électrique de la troisième variante.

2. Série de motoréducteurs selon la revendication 1, **caractérisée en ce que** la zone recouverte en direction axiale par la pièce d'adaptation (2) chevauche la zone recouverte en direction axiale par le rotor.

3. Motoréducteur selon la revendication 1, **caractérisé en ce que** la bordure du trou circulaire (5), le premier épaulement de centrage (6) et le deuxième épaulement de centrage (3) s'étendent chacune avec des interruptions dans la direction circonférentielle.

4. Série de motoréducteurs selon la revendication 1, **caractérisée en ce que** la pièce d'adaptation (2) est pressée contre le moteur électrique (1) au moyen de vis (7, 30, 50), en particulier au moyen des têtes de vis des vis (7, 30, 50), en particulier, les vis (7, 30, 50) étant chacune au moins partiellement vissées dans un trou taraudé respectif du moteur électrique, notamment orienté axialement.

5. Série de motoréducteurs selon l'une des revendications précédentes, **caractérisée en ce que** la pièce d'adaptation (2) présente des trous oblongs disposés sur un deuxième écart radial et des trous traversants disposés sur un premier écart radial, en particulier des trous circulaires,
en particulier, le deuxième écart radial étant plus grand que le premier écart radial,
les vis (7, 30, 50)
- soit traversent les trous, les trous oblongs étant chacun fermés par du matériau de la pièce d'adaptation (2), en particulier par une nervure de coulée (70),
- soit traversent les trous oblongs, les trous oblongs étant réalisés traversants,
en particulier, les trous oblongs s'étendant chacun plus en direction radiale qu'en direction circonférentielle.

6. Série de motoréducteurs selon la revendication 5, **caractérisée en ce que** les trous et les trous oblongs sont chacun disposés dans des saillies formées sur la pièce d'adaptation (2) et saillant vers l'intérieur radialement.

7. Série de motoréducteurs selon la revendication 5 ou 6, **caractérisée en ce que** la zone d'écart radial recouverte par les trous oblongs comprend et/ou contient le plus grand écart radial de la surface de contact entre le premier moteur et la pièce d'adaptation (2).

8. Série de motoréducteurs selon l'une des revendications précédentes, **caractérisée en ce que** le boîtier du premier moteur est reçu dans le deuxième épaulement de centrage (3) avec un jeu en direction radiale.

9. Série de motoréducteurs selon l'une des revendications précédentes, **caractérisée en ce que** la pièce d'adaptation (2) est une pièce moulée sous pression, en particulier une pièce moulée sous pression en zinc.

10. Série de motoréducteurs selon l'une des revendications précédentes, **caractérisée en ce que** le matériau, en particulier la nervure de coulée (70), de la pièce d'adaptation (2) présente une épaisseur de paroi comprise entre 0,2 mm et 0,8 mm, en particulier entre 0,3 mm et 0,5 mm.

11. Série de motoréducteurs selon la revendication 6, **caractérisée en ce que** la pièce d'adaptation (2) présente une saillie (20) saillante axialement, pénétrant au moins partiellement dans l'un des trous oblongs.
